# EUROPÄISCHE PATENTSCHRIFT

(11) **EP 2 218 603 B1**
(45) Veröffentlichungstag und Bekanntmachung des Hinweises auf die Patenterteilung: **24.08.2011**
(21) Anmeldenummer: 10001246.7
(22) Anmeldetag: 06.02.2010
(51) Int. Cl.: B60K 6/445, B60K 6/365, B60K 6/387, B60K 6/40, B60K 1/04

(54) **Hybridantrieb**
Hybrid drive
Entraînement hybride

(30) Priorität: 11.02.2009 DE 102009008484
(43) Veröffentlichungstag der Anmeldung: 18.08.2010
(73) Patentinhaber: Bayerische Motoren Werke, 80809 München (DE)
(72) Erfinder: Westermeir, Gerhard, Dr., 85599 Parsdorf (DE); Jaeger, Gunnar, 85598 Baldham (DE)

(56) Entgegenhaltungen:
- EP-A2- 1 375 226
- US-A1- 2006 009 323

## Beschreibung

Die vorliegende Erfindung betrifft ein Hybridfahrzeug gemäß dem Oberbegriff des Patentanspruches 1.

Ein derartiges Hybridfahrzeug ist aus der EP 1 375 226 A2 bekannt. Zum relevanten Stand der Technik zählt ferner die US 2006/0099323 A1.

Bei den gegenwärtig am Markt erhältlichen Hybridfahrzeugen stellen Verbrennungsmotoren nach wie vor die Hauptantriebsquelle dar. Eine "Erweiterung" eines herkömmlichen Fahrzeugs mit Verbrennungsmotor um "Hybridkomponenten" führt zu einem relativ hohen Fahrzeuggewicht, was nicht unbedingt auf einen "ökologischen Verzicht" hindeutet. Vor allem die bei heutigen Hybridfahrzeugen eingesetzten "Hochvoltspeicher", die zur Versorgung des "Elektroantriebs" mit elektrischer Energie benötigt werden, stellen eine beträchtliche Zusatzmasse auf. Hochvoltspeicher sind nicht nur schwer, sondern auch teuer und machen aufgrund der hohen elektrischen Spannung spezielle Sicherheitsvorkehrungen im Fahrzeug erforderlich. Trotz des hohen Aufwands, der von vielen Herstellern bei der Elektrifizierung des Antriebsstrangs betrieben wird, können heutige Hybridfahrzeuge im rein elektrischen Fahrbetrieb nur vergleichsweise kurze Distanzen bei relativ niedrigen Geschwindigkeiten absolvieren.

Aufgabe der Erfindung ist es, ein Hybridfahrzeug zu schaffen, das einen kompakt aufgebauten Antriebsstrang aufweist und das bei vergleichsweise geringer verbrennungsmotorischer Leistung eine hinreichend hohe Gesamtleistung und somit einen hohen Fahrkomfort bietet.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht darin, zwei elektrische Maschinen über ein Planetengetriebe mit einem Differentialgetriebe zu koppeln, wobei eine der beiden elektrischen Maschinen von einem "vergleichsweise kleinen" Verbrennungsmotor unterstützt werden kann.

Das Hybridfahrzeug gemäß der Erfindung weist ein Differentialgetriebe mit einem als Getriebeeingang fungierenden Differentialkorb und zwei durch eine linke und eine rechte Abtriebswelle gebildete Getriebeausgänge auf. Ein erstes "Drehmomentübertragungselement" des Planetengetriebes ist mit dem Differentialkorb des Differentialgetriebes gekoppelt. Das erste "Drehmomentübertragungselement" ist durch eine Verzahnung des Differentialkorbs bzw. durch beispielsweise einen an den Differentialkorb angeflanschten Zahnring gebildet, die bzw. der als Sonnenrad des Planetengetriebes fungiert.

Ein "zweites" Drehmomentübertragungselement des Planetengetriebes ist mit einer ersten der beiden elektrischen Maschinen gekoppelt. Das zweite Drehmomentübertragungselement des Planetengetriebes kann durch einen Planetenträger des Planetengetriebes gebildet sein. Auf dem Planetenträger sind mehrere mit dem ersten Drehmomentübertragungselement kämmende Planetenräder drehbar gelagert.

Das dritte Drehmomentübertragungselement kann durch ein Hohlrad des Planetengetriebes gebildet sein.

Aus den beiden über die beiden elektrischen Maschinen applizierten Drehzahlen ergibt sich die Drehzahl des Differentialkorbs, der als Getriebeeingang des Differentialgetriebes fungiert. Bei stehendem Fahrzeug müssen die elektrischen Maschinen nicht notwendigerweise die Drehzahl Null haben, sondern sie können z.B. gleichsinnig, d.h. in dieselbe Richtung aber mit entgegengesetzter Momentenrichtung drehen. Dies hat den Vorteil, dass die elektrischen Maschinen beim Anfahren des Fahrzeugs aus dem Stand nicht ihr jeweiliges "Losbrechmoment" überwinden müssen, wodurch sich übermäßig hohe Anfahrströme vermeiden lassen.

Nach einer Weiterbildung der Erfindung ist die zweite elektrische Maschine über eine Kupplung mit dem Verbrennungsmotor koppelbar. Befindet sich die zweite elektrische Maschine im Antriebmodus, so kann bei geschlossener Kupplung der Verbrennungsmotor zum "Boosten" eingesetzt werden, d. h. als Antriebsunterstützung für die zweite elektrische Maschine. Arbeitet die zweite elektrische Maschine hingegen im generatorischen Betriebsmodus, so kann bei geschlossener Kupplung und laufendem Verbrennungsmotor verbrennungsmotorisch elektrische Energie generiert werden.

Die oben beschriebene Anordnung ermöglicht sowohl bei einem Fahrzeug mit Frontantrieb als auch bei einem Fahrzeug mit Heckantrieb eine sehr kompakte Anordnung der einzelnen Komponenten. Die beiden elektrischen Maschinen sowie der Verbrennungsmotor und die Kupplung können in unmittelbarer Nähe des Differentialgetriebes angeordnet sein. Die Gehäusekomponenten der elektrischen Maschinen, des Hinterachsgetriebes und des Verbrennungsmotors können unmittelbar aneinander angeflanscht bzw. zu einer vormontierbaren Baugruppe miteinander verbunden sein.

Ähnlich wie bei herkömmlichen Fahrzeugen kann in Bodenbereich der Karosserie ein sich in Längsrichtung des Hybridfahrzeugs erstreckender Mitteltunnel ausgebildet sein. Zumindest in einem Teil des durch den Mitteltunnel gebildeten Bauraums können "elektrische Energiespeicher", wie z. B. Batteriezellen bzw. Kondensatoren angeordnet sein, welche die elektrischen Maschinen mit elektrischer Energie versorgen bzw. generatorisch rekuperierte Energie zwischenspeichern.

Die elektrischen Energiespeicher können in zwei "Stränge" bzw. "Gruppen" untergliedert sein, von denen jeder Strang bzw. jede Gruppe einer der beiden elektrischen Maschinen zugeordnet ist. Jeder der beiden Stränge bzw. jede der beiden Gruppen kann eine Nennspannung im Bereich zwischen 40 Volt und 400 Volt haben, z.B. 48 Volt. Bei derart niedrigen Spannungen ist im Unterschied zu den Hochvoltsystemen herkömmlicher Hybridfahrzeuge kein dezidierter Berührschutz erforderlich.

Hinsichtlich der Leistungsverteilung kann z.B. vorgesehen sein, dass jede der beiden elektrischen Maschinen eine elektromotorische Leistung im Bereich zwischen 20 und 60 KW (z. B. jeweils von 20 KW) und der Verbrennungsmotor eine Antriebsleistung von ca. 20 KW erbringt. Der Verbrennungsmotor kann somit relativ kompakt und leicht sein. Denkbar ist z.B. an einen Ein-, Zwei-, oder Dreizylindermotor, wie er im Motorradbereich anzutreffen ist.

Das Hybridfahrzeug kann ferner mit einer elektrischen Schnittstelle, z. B. einer "Steckdose" ausgestattet sein, die einen "Plug-In-Betrieb" ermöglicht. Über die elektrische Schnittstelle kann das Bordnetz bei stehendem Fahrzeug an das öffentliche Stromnetz angeschlossen werden, was ein Aufladen der elektrischen Energiespeicher ermöglicht.

Im Folgenden wird die Erfindung im Zusammenhang mit der Zeichnung näher erläutert. Es zeigen:
- Figuren 1 und 2: das Grundprinzip der Erfindung in schematischer Darstellung; und
- Figur 3a - 3d: verschiedene Betriebszustände eines weiteren Ausführungsbeispiels der Erfindung.

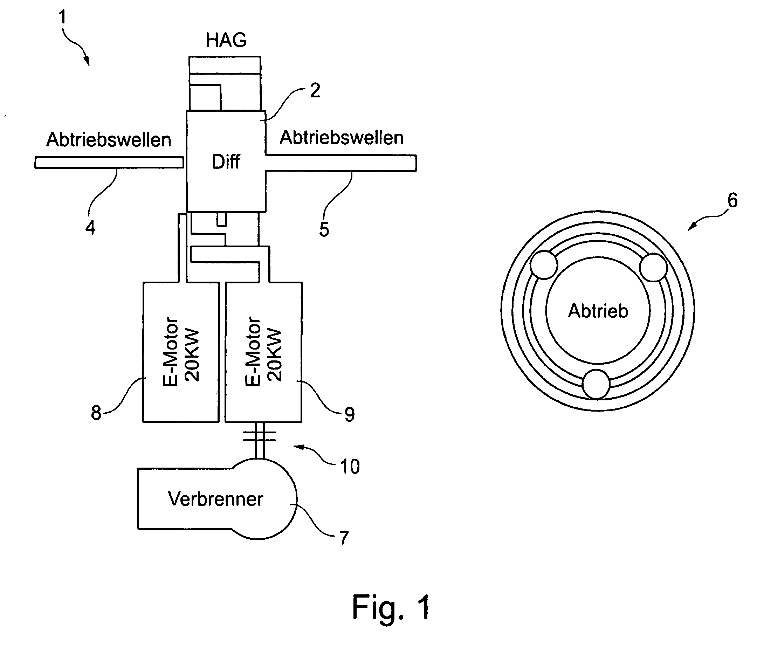

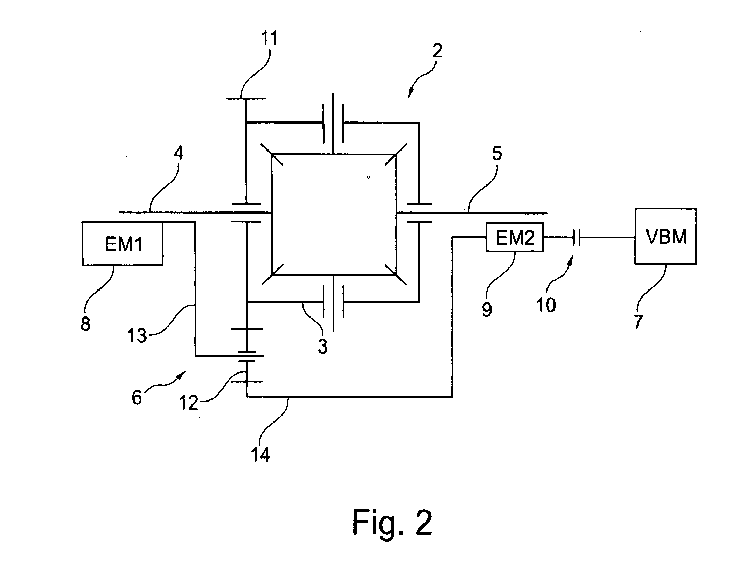

Figur 1 zeigt in schematischer Darstellung den Antriebsstrang 1 eines Hybridfahrzeugs. Der Antriebsstrang 1 weist ein Differentialgetriebe 2 mit einem als Getriebeeingang fungierenden Differentialkorb 3 (vgl. Figur 2) sowie einer linken und einer rechten Abtriebswelle 4, 5 auf. Ferner ist ein Planetengetriebe 6 (vgl. Figur 2) vorgesehen, ein Verbrennungsmotor 7 sowie eine erste elektrische Maschine 8 und eine zweite elektrische Maschine 9, die über eine Kupplung 10 unmittelbar oder mittelbar über eine hier nicht näher dargestellte Drehschwingungsdämpfungseinrichtung mit der Kurbelwelle des Verbrennungsmotors 7 koppelbar ist.

Wie am besten aus Figur 2 ersichtlich ist, weist der Differentialkorb 3 eine Verzahnung 11 auf, die als Sonnenrad des Planetengetriebes 6 fungiert. Mit der Verzahnung 11 kämmen mehrere in Umfangsrichtung der Verzahnung 11 angeordnete Planetenräder, von denen hier lediglich ein Planetenrad 12 dargestellt ist. Das Planetenrad 12 ist drehbar auf einem Planetenträger 13 angeordnet, der unmittelbar oder mittelbar über eine Übersetzungsstufe mit der elektrischen Maschine 8 drehgekoppelt ist. Der Planetenträger 13 kann somit von der elektrischen Maschine 8 angetrieben werden. Im generatorischen Betrieb ist es umgekehrt, d. h. der Planetenträger 13 treibt dann die elektrische Maschine 8 an.

Die Planetenräder 12 kämmen ferner mit einem Hohlrad 14, das unmittelbar oder mittelbar über eine hier nicht dargestellte Übersetzungsstufe mit der elektrischen Maschine 9 drehgekoppelt ist.

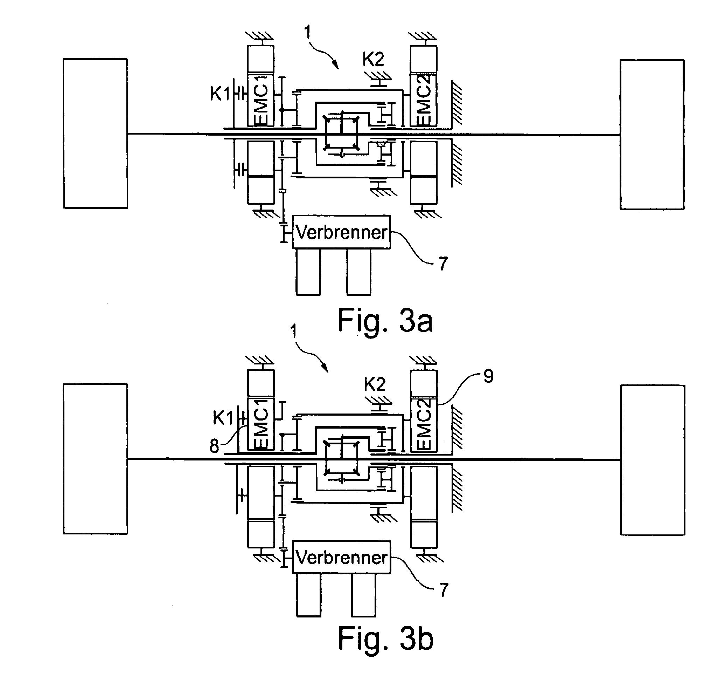

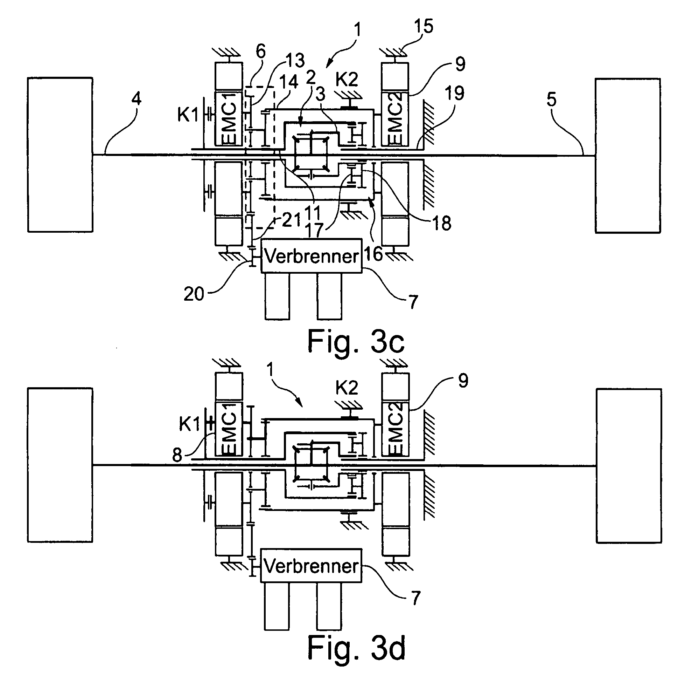

Die Figuren 3a - 3d zeigen einen Antriebsstrang 1 eines Hybridfahrzeugs (Bezugszeichen siehe primär Figur 3c). Entsprechend dem Ausführungsbeispiel der Figur 2 weist der Antriebsstrang 1 ein Differentialgetriebe 2 mit einem Differentialkorb 3 sowie einer linken und einer rechten Abtriebswelle 4 bzw. 5 auf. Ferner ist ein Planetengetriebe 6 sowie ein Verbrennungsmotor 7, eine erste elektrische Maschine 8 und eine zweite elektrische Maschine 9 vorgesehen.

Ein Sonnenrad 11 des Planetengetriebes 6 bildet ein erstes Drehmomentübertragungselement des Planetengetriebes. Ein mit der ersten elektrischen Maschine 8 verbundener Planetenträger 13 bildet ein zweites Drehmomentübertragungselement des Planetengetriebes 6. Ein Hohlrad 14 bildet ein drittes Drehmomentübertragungselement des Planetengetriebes 6. Das Hohlrad 14 ist mit der zweiten elektrischen Maschine 9 gekoppelt.

Ferner ist eine Kupplung K1 vorgesehen. Über die Kupplung K1 kann der Planetenträger 13 bzw. die damit verbundene erste elektrische Maschine 8 mit dem Sonnenrad 11 gekoppelt werden. Durch Schließen der Kupplung K1 kann somit das Planetengetriebe 6 "verblockt" werden.

Ferner ist eine Bremse K2 vorgesehen, mittels der das Hohlrad 14 bzw. die zweite elektrische Maschine 9 in Bezug auf ein fahrzeugfestes Bauteil, wie z. B. ein Getriebegehäuse 15, festgestellt werden kann.

Wie aus den Figuren 3a - 3d ersichtlich ist, ist der Differentialkorb 3 über ein Übersetzungsgetriebe 16 mit dem ersten Drehmomentübertragungselement 11 gekoppelt. Das Übersetzungsgetriebe 16 ist durch mehrere "Doppelplaneten", die auf einem hier nicht näher dargestellten Planetenträger gelagert sind, gebildet. Jeder der Doppelplaneten weist ein erstes Planetenrad 17 auf, welches mit dem Differentialkorb 3 und dem ersten Drehmomentübertragungselement 11 kämmt, wobei die ersten Planetenräder 17 im Bereich zwischen dem Differentialkorb 3 und dem ersten Drehmomentübertragungselement 11 angeordnet sind. Drehfest mit dem ersten Planetenrad 17 eines jeden Doppelplaneten ist ein zweites Planetenrad 18 verbunden, das mit einer fahrzeug- bzw. getriebefeststehenden Welle 19 mit Außenverzahnung kämmt.

Es sei ausdrücklich erwähnt, dass das Übersetzungsgetriebe 16 nicht unbedingt erforderlich ist. Alternativ dazu könnte das Sonnenrad 11, welches verallgemeinert auch als erstes Drehmomentübertragungselement bezeichnet wurde, auch direkt mit dem Differentialkorb 3 verbunden sein.

Vollständigkeitshalber sei noch erwähnt, dass der Verbrennungsmotor 7 über eine Übersetzung, die hier durch zwei Zahnräder 20, 21 gebildet ist, mit dem Planetenträger 13 gekoppelt ist, welcher wiederum drehfest mit dem Anker der ersten Maschine 8 verbunden ist.

Im Folgenden wird auf einzelne Betriebszustände, welche die in Figuren 3a -3d gezeigte Anordnung einnehmen kann, näher eingegangen.

Figur 3a zeigt den Betriebszustand "Kraftwaage". Hier sind die Kupplung K1 und die Bremse K2 geöffnet. Die beiden elektrischen Maschinen 8, 9 sind "eingeschaltet". "Eingeschaltet" bedeutet, dass sie als Elektromotoren bzw. als Generatoren arbeiten. Der Verbrennungsmotor kann zusätzlich eingeschaltet werden. Dieser Betriebszustand ist für niedrige Fahrzeuggeschwindigkeitsbereiche geeignet, in denen eine hohe Dynamik benötigt wird, d. h. zum Beschleunigen des Fahrzeugs aus dem Stand bzw. aus einem niedrigen Geschwindigkeitsbereich heraus.

Wichtig zu erwähnen ist, dass mit der in den Figuren 3a - 3d gezeigten Anordnung ein Anfahren aus dem Stand heraus möglich ist, ohne dass die elektrischen Maschinen von der Drehzahl Null weg beschleunigt werden müssen, was eine sehr kostengünstige Auslegung und Gestaltung der elektrischen Maschinen ermöglicht. Die elektrischen Maschinen können vielmehr bereits eine gewisse Drehzahl haben, wobei sie zum Anfahren des Fahrzeugs in dieselbe Richtung aber mit entgegengesetzter Momentenrichtung drehen können.

Figur 3b zeigt einen Betriebszustand, bei dem die Kupplung K1 geschlossen und die Bremse K2 offen ist. Die elektrischen Maschinen 8, 9 laufen hier mit ein- und derselben Drehzahl. Der Verbrennungsmotor 7 kann gegebenenfalls zugeschaltet sein. Die Leistungen der beiden elektrischen Maschinen 8, 9 addieren sich in diesem Zustand. Dieser Betriebszustand ist für einen mittleren Fahrzeuggeschwindigkeitsbereich von z. B. 50 - 150 km/h geeignet und bietet in diesem Drehzahlbereich eine hohe Dynamik.

Figur 3c zeigt einen Betriebszustand, bei dem die Kupplung K1geöffnet und die Bremse K2 geschlossen ist. Die elektrische Maschine 8 arbeitet in diesem Betriebszustand, wohingegen die elektrische Maschine 9 ausgeschaltet ist. Der Verbrennungsmotor 7 kann wahlweise zu- oder abgeschaltet sein. Dieser Betriebszustand ist für Fahrten mit im Wesentlichen konstanter Geschwindigkeit geeignet, wobei die elektrische Maschine 8 mit einer moderaten Drehzahl von z.B. 1000-3000 U/min arbeitet.

Figur 3d zeigt den Betriebszustand "Parken", in dem das Fahrzeug abgestellt werden kann. Im Betriebszustand "Parken" ist die Kupplung K1 und die Bremse K2 jeweils geschlossen und beide Elektromotoren 8, 9 sind ausgeschaltet.

## Patentansprüche

1. Hybridfahrzeug mit
- einem Differentialgetriebe (2), das einen als Getriebeeingang fungierenden Differentialkorb (3) sowie zwei durch eine linke und eine rechte Abtriebswelle (4, 5) gebildete Getriebeausgänge aufweist,
- einem Planetengetriebe (6),
- einem Verbrennungsmotor (7) und
- einer ersten und einer zweiten elektrischen Maschine (8, 9),
wobei
- ein erstes Drehmomentübertragungselement (11) des Planetengetriebes (6) mit dem Differentialkorb. (3),
- ein zweites Drehmomentübertragungselement (13) des Planetengetriebes (6) mit der der ersten elektrischen Maschine (8) und
- ein drittes Drehmomentübertragungselement (14) des Planetengetriebes (6) mit der zweiten elektrischen Maschine (9) drehgekoppelt ist
**dadurch gekennzeichnet, dass**
das erste Drehmomentübertragungselement (11) durch eine Verzahnung des Differentialkorbs (3) bzw. durch eine mit dem Differentialkorb (3) verbundene Verzahnung gebildet ist und als Sonnenrad des Planetengetriebes (6) fungiert.

2. Hybridfahrzeug nach Anspruch 1, **dadurch gekennzeichnet, dass** das zweite Drehmomentübertragungselement (13) durch einen Planetenträger des Planetengetriebes (6) gebildet ist.

3. Hybridfahrzeug nach einem der Ansprüche 1 bis 2, **dadurch gekennzeichnet, dass** das dritte Drehmomentübertragungselement (14) durch ein Hohlrad des Planetengetriebes (6) gebildet ist.

4. Hybridfahrzeug nach einem der Ansprüche 1 bis 3, **dadurch gekennzeichnet, dass** die zweite elektrische Maschine (9) über eine Kupplung (10) mit dem Verbrennungsmotor (7) koppelbar ist.

5. Hybridfahrzeug nach einem der Ansprüche 1 bis 4, **dadurch gekennzeichnet, dass** das Differentialgetriebe (2) ein Hihterachsgetriebe des Hybridfahrzeugs ist.

6. Hybridfahrzeug nach einem der Ansprüche 1 bis 5, **dadurch gekennzeichnet, dass** die beiden elektrischen Maschinen (8, 9) in unmittelbarer Nähe des Differentialgetriebes (2) angeordnet sind.

7. Hybridfahrzeug nach einem der Ansprüche 1 bis 6, **dadurch gekennzeichnet, dass** der Verbrennungsmotor (7) und die Kupplung (10) in unmittelbarer Nähe des Differentialgetriebes (2) angeordnet sind.

8. Hybridfahrzeug nach einem der Ansprüche 1 bis 7, **dadurch gekennzeichnet, dass** im Fahrzeugboden ein sich in Längsrichtung des Hybridfahrzeugs erstreckender Mitteltunnel vorgesehen ist.

9. Hybridfahrzeug nach Anspruch 8, **dadurch gekennzeichnet, dass** zumindest in einem Teil des durch den Mitteltunnel gebildeten Bauraums elektrische Energiespeicher angeordnet sind, welche zur Versorgung der elektrischen Maschinen (8, 9) mit elektrischer Energie vorgesehen sind.

10. Hybridfahrzeug nach Anspruch 19, **dadurch gekennzeichnet, dass** die elektrischen Energiespeicher durch Batterien und/oder durch Kondensatoren gebildet sind.

11. Hybridfahrzeug nach einem der Ansprüche 9 oder 10, **dadurch gekennzeichnet, dass** mindestens ein erster, der ersten elektrischen Maschine (8) zugeordneter Energiespeicher und mindestens ein zweiter, der zweiten elektrischen Maschine (9) zugeordneter Energiespeicher vorgesehen ist.

12. Hybridfahrzeug nach einem der Ansprüche 9 bis 11, **dadurch gekennzeichnet, dass** eine mit den elektrische Energiespeichern verbundene elektrische Schnittstelle vorgesehen ist, über welche die elektrischen Energiespeicher bei stehendem Fahrzeug an ein externes Stromnetz angeschlossen werden können.

13. Hybridfahrzeug nach einem der Ansprüche 1 bis 12, **dadurch gekennzeichnet, dass** die elektrischen Maschinen jeweils eine Leistung von weniger als 50 KW, insbesondere von weniger als jeweils 25 KW aufweisen.

14. Hybridfahrzeug nach einem der vorausgehenden Ansprüche, **dadurch gekennzeichnet, dass** eine Kurbelwelle des Verbrennungsmotors (7) über eine Übersetzungsstufe (20, 21), insbesondere über eine Zahnradstufe, mit dem zweiten Drehmomentübertragungselement (13) gekoppelt ist.

15. Hybridfahrzeug nach einem der vorausgehenden Ansprüche, **dadurch gekennzeichnet, dass** eine Kupplung (K1) vorgesehen ist, über welche die erste elektrische Maschine 8 bzw. dass damit gekoppelte zweite Drehmomentübertragungselement (13) mit dem ersten Drehmomentübertragungselement (11) koppelbar ist.

16. Hybridfahrzeug nach einem der vorausgehenden Ansprüche, **dadurch gekennzeichnet, dass** eine Bremse (K2) vorgesehen ist, mittels der das dritte Drehmomentübertragungselement (14) in Bezug auf ein fahrzeugfestes Bauteil, insbesondere in Bezug auf ein Getriebegehäuse (15) festgestellt werden kann.

17. Hybridfahrzeug nach einem der vorausgehenden Ansprüche, **dadurch gekennzeichnet, dass** das erste Drehmomentübertragungselement (11) über eine Übersetzung (16) permanent mit dem Differentialkorb (3) gekoppelt ist.

18. Hybridfahrzeug nach einem der Ansprüche 1 bis 17, **dadurch gekennzeichnet, dass** das erste Drehmomentübertragungselement (11) unmittelbar mit dem Differentialkorb (3) drehgekoppelt ist.

## Claims

1. A hybrid vehicle comprising
- a differential gear (2) comprising an input in the form of a differential cage (3) and two outputs formed by a left and a right driven shaft (4, 5),
- a planetary gear (6),
- an internal combustion engine (7) and
- a first and a second electric machine (8, 9), wherein
- a first torque transmitting element (11) of the planetary gear (6) is coupled in rotation to the differential cage (3),
- a second torque transmitting element (13) of the planetary gear (6) is coupled in rotation to the first electric machine (8) and
- a third torque transmitting element (14) of the planetary gear (6) is coupled in rotation to the second electric machine (9),
**characterised in that**
the first torque transmitting element (11) is in the form of teeth on the differential cage (3) or teeth connected to the differential cage (3) and is the sun wheel of the planetary gear (6).

2. A hybrid vehicle according to claim 1, **characterised in that** the second torque transmitting element (13) is a pinion cage of the planetary gear (6).

3. A hybrid vehicle according to claim 1 or claim 2, **characterised in that** the third torque transmitting element (14) is a crown wheel of the planetary gear (6).

4. A hybrid vehicle according to any of claims 1 to 3, **characterised in that** the second electric machine (9) can be coupled to the engine (7) by a clutch (10).

5. A hybrid vehicle according to any of claims 1 to 4, **characterised in that** the differential gear (2) is a rear-axle gear of the hybrid vehicle.

6. A hybrid vehicle according to any of claims 1 to 5, **characterised in that** the two electric machines (8, 9) are disposed in the immediate neighbourhood of the differential gear (2).

7. A hybrid vehicle according to any of claims 1 to 6, **characterised in that** the internal combustion engine (7) and the clutch (10) are disposed in the immediate neighbourhood of the differential gear (2).

8. A hybrid vehicle according to any of claims 1 to 7, **characterised in that** a tunnel for medium extending in the longitudinal direction of the hybrid vehicle is provided in the floor of the vehicle.

9. A hybrid vehicle according to claim 8, **characterised in that** electric energy accumulators for supplying electric energy to the electric machines (8, 9) are provided in at least a part of the space occupied by the tunnel.

10. A hybrid vehicle according to claim 19, **characterised in that** the electric energy accumulators are in the form of batteries and/or capacitors.

11. A hybrid vehicle according to claim 9 or 10, **characterised in that** an at least one first energy accumulator associated with the first electric machine (8) is provided and at least one second energy accumulator is associated with the second electric machine (9).

12. A hybrid vehicle according to any of claims 9 to 11, **characterised by** an electric interface connected to the electric energy accumulators, via which the electric energy accumulators can be connected to an external power network when the vehicle is stationary.

13. A hybrid vehicle according to any of claims 1 to 12, **characterised in that** the electric machines each have a power of less than 50 kW, especially less than 25 kW.

14. A hybrid vehicle according to any of the preceding claims, **characterised in that** a crankshaft of the engine (7) is coupled to the second torque transmitting element (13) via a transmission stage (20, 21), especially a gearwheel stage.

15. A hybrid vehicle according to any of the preceding claims, **characterised by** a clutch (K1) for coupling the first electric machine (8) or the second torque transmitting element (13) coupled thereto to the first torque transmitting element (11).

16. A hybrid vehicle according to any of the preceding claims, **characterised by** a brake (K2) whereby the third torque transmitting element (14) can be locked relative to a component fixed to the vehicle, especially relative to a gearbox (15).

17. A hybrid vehicle according to any of the preceding claims, **characterised in that** the first torque transmitting element (11) is permanently coupled to the differential cage (3) by a transmission (16).

18. A hybrid vehicle according to any of claims 1 to 17, **characterised in that** the first torque transmitting element (11) is directly coupled in rotation to the differential cage (3).

## Revendications

1. Véhicule hybride comprenant :
- un différentiel (2) ayant une cage (3) fonctionnant comme entrée de transmission ainsi que deux sorties de transmission comme arbre de sortie gauche et arbre de sortie droit (4, 5),
- une transmission planétaire (6),
- un moteur à combustion (7), et
- une première et une seconde machine électrique (8, 9),
véhicule dans lequel
- un premier élément de transmission de couple (11) de la transmission planétaire (6), est relié à la cage (3) du différentiel,
- un second élément de transmission de couple (13) de la transmission planétaire (6), est relié à la première machine électrique (8), et
- un troisième élément de transmission de couple (14) de la transmission planétaire (6), est relié à la seconde machine électrique (9) par un couplage par rotation,
véhicule hybride **caractérisé en ce que**
- le premier élément de transmission de couple (11) est constitué par une denture de la cage (3) ou par une denture reliée à la cage (3) et qui fonctionne comme roue solaire de la transmission planétaire (6).

2. Véhicule hybride selon la revendication 1,
**caractérisé en ce que**
le second élément de transmission de couple (13) est constitué par le support planétaire de la transmission planétaire (6).

3. Véhicule hybride selon les revendications 1 et 2,
**caractérisé en ce que**
le troisième élément de transmission de couple (14) est constitué par une roue creuse de la transmission planétaire (6).

4. Véhicule hybride selon l'une des revendications 1 à 3,
**caractérisé en ce que**
la seconde machine électrique (9) est couplée au moteur à combustion (7) par un embrayage (10).

5. Véhicule hybride selon l'une des revendications 1 à 4,
**caractérisé en ce que**
la transmission à différentiel (2) est la transmission de l'essieu arrière du véhicule hybride.

6. Véhicule hybride selon l'une des revendications 1 à 5,
**caractérisé en ce que**
les deux machines électriques (8, 9) sont installées à proximité immédiate du différentiel (2).

7. Véhicule hybride selon l'une des revendications 1 à 6,
**caractérisé en ce que**
le moteur à combustion (7) et l'embrayage (10) sont prévus au voisinage immédiat du différentiel (2).

8. Véhicule hybride selon l'une des revendications 1 à 7,
**caractérisé en ce que**
le fond du véhicule comporte un tunnel central s'étendant dans la direction longitudinale du véhicule hybride.

9. Véhicule hybride selon la revendication 8,
**caractérisé en ce qu'**
au moins une partie du volume formé par le tunnel central, reçoit des accumulateurs d'énergie électrique alimentant les machines électriques (8, 9) avec de l'énergie électrique.

10. Véhicule hybride selon la revendication 9,
**caractérisé en ce que**
les accumulateurs d'énergie électrique, sont des batteries et/ou des condensateurs.

11. Véhicule hybride selon l'une des revendications 9 ou 10,
**caractérisé par**
au moins un premier accumulateur d'énergie associé à la première machine électrique (8) et au moins un second accumulateur d'énergie associé, à la seconde machine électrique (9).

12. Véhicule hybride selon l'une des revendications 9 à 11,
**caractérisé par**
une interface électrique reliée aux accumulateurs d'énergie électrique par laquelle les accumulateurs d'énergie électrique, peuvent être raccordés à un réseau électrique externe lorsque le véhicule est arrêté.

13. Véhicule hybride selon l'une des revendications 1 à 12,
**caractérisé en ce que**
les machines électriques ont chacune une puissance inférieure à 50 KW, et notamment inférieure chacune à 25 KW.

14. Véhicule hybride selon l'une des revendications précédentes,
**caractérisé en ce que**
le vilebrequin du moteur à combustion (7) est couplé par un étage démultiplicateur (20, 21), notamment par un étage à pignons dentés au second élément de transmission de couple (13).

15. Véhicule hybride selon l'une des revendications précédentes,
**caractérisé par**
un embrayage (K1) qui permet de coupler au premier élément de transmission de couple (11) la première machine électrique (8) ou le second élément de transmission de couple (13) relié à celle-ci.

16. Véhicule hybride selon l'une des revendications précédentes,
**caractérisé par**
un frein (K2) permettant de bloquer le troisième élément de transmission de couple (14) par rapport à un composant solidaire du véhicule, notamment par rapport au boîtier de transmission (15).

17. Véhicule hybride selon l'une des revendications précédentes,
**caractérisé en ce que**
le premier élément de transmission de couple (11) est couplé en permanence à la cage (3) par l'intermédiaire d'une démultiplication (16).

18. Véhicule hybride selon l'une des revendications 1 à 17,
**caractérisé en ce que**
le premier élément de transmission de couple (11) est couplé en rotation directement à la cage (3).
